# EUROPÄISCHE PATENTANMELDUNG

(11) **EP 0 941 880 A2**
(43) Veröffentlichungstag der Anmeldung: **15.09.1999**
(21) Anmeldenummer: 99101946.4
(22) Anmeldetag: 30.01.1999
(51) Int. Cl.: B60J 5/04

(54) **Karosserieabschnitt für eine Kraftfahrzeugkarosserie**

(30) Priorität: 12.03.1998 DE 19810643
(71) Anmelder: DaimlerChrysler AG, 70567 Stuttgart (DE)
(72) Erfinder: Fussnegger, Wolfgang, 72074 Tübingen (DE); Thoms, Volker, Prof. Dr., 75365 Calw-Hirsau (DE)

(57) **Zusammenfassung**

Aus dem Stand der Technik ist zur lösbaren Festlegung eines Karosserieaußenhautteiles auf einem Karosseriestrukturteil ein elastisches Randprofil vorgesehen, das eine Profilkante des Karosserieaußenhautteiles einerseits und einen Umfangsrand des Karosseriestrukturteiles andererseits umgreift.

Erfindungsgemäß ist die Profilkante des Karosserieaußenhautteiles formschlüssig in dem elastischen Randprofil eingebettet, das elastische Randprofil weist eine elastisch biegsame Rastnasenprofilanordnung auf, die auf einen benachbarten Umfangsrand des Karosseriestrukturteiles formschlüssig aufgerastet ist, und der Rastnasenprofilanordnung ist eine lösbare Sicherungsanordnung zur Blockierung der elastisch biegsamen Rastnasenprofilanordnung in ihrer den Umfangsrand des Karosseriestrukturteiles übergreifenden Funktionsposition zugeordnet.

Verwendung für Fahrzeugseitentüren.

## Beschreibung

Die Erfindung betrifft einen Karosserieabschnitt für eine Kraftfahrzeugkarosserie mit einem inneren Karosseriestrukturteil, auf das außen ein Karosserieaußenhautteil über ein aus einem elastisch nachgiebigen Material hergestelltes Randprofil aufgesetzt ist, wobei das Karosserieaußenhautteil mit einer nach innen abgewinkelten, sich längs des Umfangs des Karosserieaußenhautteils erstreckenden Profilkante versehen ist.

Ein solcher Karosserieabschnitt für eine Kraftfahrzeugkarosserie ist in Form einer Karosserieseitentür aus dem US-Patent 5 446 999 bekannt. Die Karosserieseitentür weise ein inneres Karosseriestrukturteil sowie ein lösbar mit dem inneren Karosseriestrukturteil verbundenes Karosserieaußenhautteil auf. Die Verbindung des Karosserieaußenhautteiles mit dem Karosseriestrukturteil erfolgt mittels eines elastischen Randprofiles, das eine umlaufende, J-förmige Profilkante des Karosserieaußenhautteiles einerseits und eine Umfangskante des Karosseriestrukturteiles andererseits übergreift. Das elastische Randprofil weist einen H-förmigen Querschnitt auf.

Aus der DE 195 14 963 A1 ist eine Kraftfahrzeugtür bekannt, die eine Außenabdeckung in Form eines Türblattes sowie eine innenseitige Abdeckung aufweist. Das Türblatt und die innere Abdeckung sind dadurch miteinander verbunden, daß an einer Unterseite am Türblatt ein Umbug vorgesehen ist, in den der Umfangsrand der inneren Abdeckung formschlüssig eingreift. An der Oberseite ist eine weitere Hinterschneidung vorgesehen, bei der die dem Türblatt abgewandte Wand als Rastnase ausgebildet ist. Diese ist in eine entsprechende Hinterschneidung eines Grundkörpers der Kraftfahrzeugtür mit entsprechender Rastnase klipsartig eingerastet. Der obere Rand des Grundkörpers und die stegförmige Verlängerung des Türblattes sind zudem über eine Metallklammer miteinander verbunden.

Die EP 0 424 760 A2 offenbart eine weitere Kraftfahrzeugtür, die einen Grundkörper aufweist, der mit einem lösbaren Türblatt versehen ist. Das Türblatt ist in einfacher Weise austauschbar, indem zueinander korrespondierende Ränder des Grundkörpers und des Türblattes zueinander öffnende Nuten aufweisen, in die ein die Ränder miteinander verbindender, zähelastischer und Wärmedehnungsunterschiede ausgleichender Profilstreifen eingesetzt ist.

Aufgabe der Erfindung ist es, einen Karosserieabschnitt der eingangs genannten Art zu schaffen, der eine einfache und sichere Befestigung des Karosserieaußenhautteiles auf dem Karosseriestrukturteil ermöglicht.

Diese Aufgabe wird dadurch gelöst, daß die Profilkante des Karosserieaußenhautteiles formschlüssig in dem elastischen Randprofil eingebettet ist, daß das elastische Randprofil eine elastisch biegsame Rastnasenprofilanordnung aufweist, die auf einen benachbarten Umfangsrand des Karosseriestrukturteiles formschlüssig aufgerastet ist, und daß der Rastnasenprofilanordnung eine lösbare Sicherungsanordnung zur Blockierung der elastisch biegsamen Rastnasenprofilanordnung in ihrer den Umfangsrand des Karosseriestrukturteiles übergreifenden Funktionsposition zugeordnet ist. Die Sicherung des Karosserieaußenhautteiles an den Karosseriestrukturteil mittels der Sicherungsanordnung verhindert, daß das Karosserieaußenhautteil sich von dem Karosseriestrukturteil wieder lösen kann. Die Sicherungsanordnung gewährleistet zudem einen Diebstahl- und Einbruchschutz, da das Karosserieaußenhautteil in der Funktionsposition des Randprofiles nicht nach außen abgezogen werden kann. Durch die erfindungsgemäße Lösung ist auch eine einfache Auswechselbarkeit des Karosserieaußenhautteiles ermöglicht. Die erfindungsgemäße Lösung gewährleistet zudem, daß das Karosserieaußenhautteil erst dann auf das Karosseriestrukturteil aufgebracht werden kann, wenn entsprechende Lackierungen der beiden Teile des Karosserieabschnittes fertiggestellt sind. Außerdem kann das Karosseriestrukturteil je nach seiner Funktion innerhalb der gesamten Kraftfahrzeugkarosserie auch bereits mit entsprechenden Funktionsaggregaten bestückt werden, die in einfacher Seite von außen her montiert werden können. Die Montage des Karosserieaußenhautteiles kann dann erst anschließend, d.h. nach der fertigen Montage des Karosseriestrukturteiles, erfolgen. Diese Vorteile ergeben sich insbesondere bei der Gestaltung des Karosserieabschnittes als Fahrzeugseitentür oder -heckklappe, da bei diesen Bauteilen eine Vielzahl von mechanischen, elektrischen, pneumatischen und elektronischen Bauelementen in dem Karosseriestrukturteil der Fahrzeugseitentür bzw. der Fahrzeugheckklappe untergebracht werden müssen. Deren Unterbringung ist von der Außenseite her wesentlich einfacher möglich als dies bei einer bereits aufgesetzten Außenhaut von innen her der Fall wäre. Die Einbettung der Profilkante in dem elastischen Randprofil erfolgt in bevorzugter Weise durch Umschließen der Profilkante mittels des elastisch nachgiebigen Materiales des Randprofiles im plastifizierten Zustand in einer entsprechenden Werkzeugform. In gleicher Weise kann das Randprofil jedoch auch erst im fertig hergestellten Zustand auf die Profilkante des Karosserieaußenhautteiles aufgezogen werden. Dies ist bei ausreichender elastischer Nachgiebigkeit des Randprofiles ohne großen Aufwand möglich, wobei das Umschließen der Profilkante mittels des elastischen Randprofiles auch bei dieser Ausführungsform einen sicheren Rückhalt des Randprofiles auf dem Karosserieaußenhautteil gewährleistet.

In Ausgestaltung der Erfindung weist das Randprofil einen die Profilkante zu einem benachbarten Karosserieabschnitt flankierenden Dichtlippenabschnitt auf, der derart bündig mit einer Außenkontur des Karosserieaußenhautteiles abschließt, daß der Dichtlippenabschnitt eine Abstandsfuge zwischen den benachbarten Karosserieabschnitten ausfüllt. Dadurch wird eine sichere Abdichtung entsprechender Abstandsfugen erzielt. Diese Ausgestaltung ist insbesondere von Vorteil bei der Gestaltung des Karosserieabschnittes als Fahrzeugseitentür, da dann durch den Dichtlippenabschnitt die Türfuge abgedichtet werden kann.

In weiterer Ausgestaltung der Erfindung weist das Randprofil zur Aufnahme der Sicherungsanordnung eine an die Rastnasenprofilanordnung anschließende Stecknut auf, und die Sicherungsanordnung ist als korrespondierendes Steckprofil gestaltet, das kraftschlüssig in der Stecknut aufnehmbar ist. Dies ist eine besonders einfache und funktionssichere Ausgestaltung, wobei das Steckprofil rahmenförmig gestaltet sein kann und Teil einer Innenverkleidung sein kann.

In Ausgestaltung der Erfindung ist die Stecknut auf gegenüberliegenden Seiten mit sägezahnartigen Profilierungen versehen. Durch diese Profilierungen wird der Kraftschluß zwischen dem Steckprofil und dem Randprofil in der Funktionsposition des Steckprofiles erhöht.

In weiterer Ausgestaltung der Erfindung weist das elastische Material des Randprofiles isolierende Eigenschaften auf. Dadurch ist insbesondere eine Schallabkopplung des Karosserieaußenhautteiles von dem Karosseriestrukturteil erzielbar.

In weiterer Ausgestaltung der Erfindung sind der Dichtlippenabschnitt und die Rastnasenprofilanordnung als einstückig angeformte Teile des Randprofiles gestaltet. Dies ermöglicht eine besonders einfache und kostengünstige Herstellung des Randprofiles.

Weitere Vorteile und Merkmale der Erfindung ergeben sich aus den Unteransprüchen. Nachfolgend ist ein bevorzugtes Ausführungsbeispiel der Erfindung beschrieben und anhand der Zeichnungen dargestellt.
- Fig. 1: zeigt schematisch eine Seitenansicht eines Personenkraftwagens, der mit einer Ausführungsform eines erfindungsgemäßen Karosserieabschnittes in Form einer Fahrzeugseitentür versehen ist, und
- Fig. 2: in vergrößerter Darstellung einen Schnitt durch die Fahrzeugseitentür entlang der Schnittlinie II-II in Fig. 1.

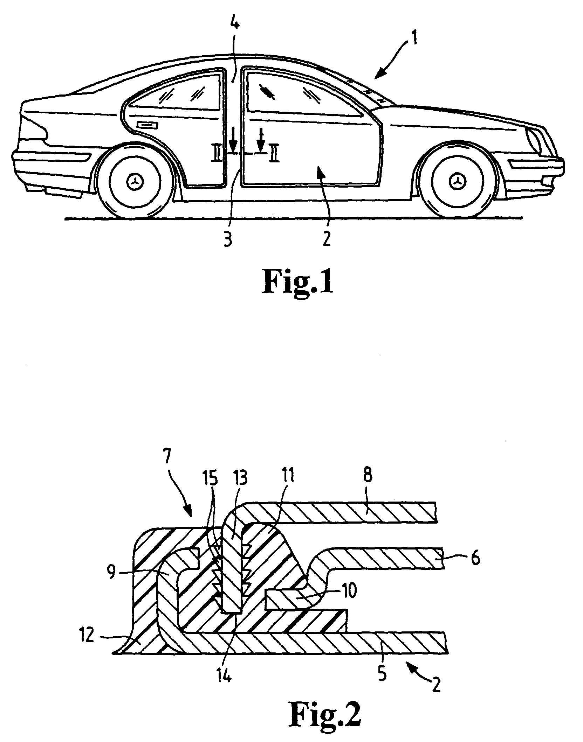

Ein Personenkraftwagen 1 weist gemäß Fig. 1 eine selbsttragende Kraftfahrzeugkarosserie auf, die als Karosserieabschnitt unter anderem auf gegenüberliegenden Seiten zwei frontseitige Fahrzeugseitentüren 2 aufweist, die identisch zueinander gestaltet sind. Eine solche Fahrzeugseitentür 2 ist in einem Karosserieausschnitt schwenkbeweglich gelagert, wobei in Fahrzeuglängsrichtung nach hinten eine B-Säule 4 an die Fahrzeugseitentür 2 anschließt, die ebenfalls einen Karosserieabschnitt der Kraftfahrzeugkarosserie darstellt. Zwischen der Fahrzeugseitentür 2 und dem durch entsprechende Karosserieabschnitte der Fahrzeugkarosserie gebildeten Karosserieausschnitt verbleibt eine Türfuge 3.

Die Fahrzeugseitentür 2 weist ein als Innenteil dienendes Karosseriestrukturteil 6 auf, in dem verschiedene Funktionsaggregate der Fahrzeugseitentür 2 wie Fensterscheibe, Fensterheberantrieb, Türinnengriff, Türschloß, Lautsprecher und ähnliches eingebaut sind. Ein Karosserieaußenhautteil 5 der Fahrzeugseitentür 2 ist von außen her auf das Karosseriestrukturteil 6 in nachfolgend näher beschriebener Weise aufgebracht, wobei zur Festlegung des Karosserieaußenhautteiles 5 auf dem Karosseriestrukturteil 6 ein Randprofil 7 vorgesehen ist, das aus einem elastisch nachgiebigen Kunststoff einstückig hergestellt ist. Das Randprofil 7 umschließt eine C-förmige Profilkante 9 des Karosserieaußenhautteiles 5 formschlüssig, die sich über den gesamten Umfang des Karosserieaußenhautteiles 5 umlaufend erstreckt. Bei einem nicht dargestellten Ausführungsbeispiel der Erfindung ist die Profilkante abschnittsweise über den Umfang des Karosserieaußenhautteiles verteilt angeordnet.

Die Profilkante 9 wird von dem Randprofil 7 derart umschlossen, daß die Profilkante 9 vollständig in dem Randprofil 7 eingebettet ist. Die C-förmige Profilkante 9 ist nach innen rechtwinklig umgebogen, wobei ihr freies Ende erneut rechtwinklig zum Karosseriestrukturteil 6 hin nach innen gekrümmt ist. Der die Profilkante 9 umschließende Profilabschnitt des Randprofiles 7 weist einen Dichtlippenabschnitt 12 auf, der fluchtend mit einer Außenkontur des Karosserieaußenhautteiles 5 abschließt und auf seiner der Profilkante 9 gegenüberliegenden freien Außenseite derart geformt ist, daß die Türfuge 3 im geschlossenen Zustand der Fahrzeugseitentür 2 durch den Dichtlippenabschnitt 12 vollständig ausgefüllt und damit abgedichtet ist. Wie aus Fig. 2 erkennbar ist, weist der Dichtlippenabschnitt 12 zwei zu gegenüberliegenden Seiten abragende Steglippen auf, die am Karosserieaußenhautteil 5 einerseits und an dem nicht dargestellten Karosserieausschnitt andererseits anliegen.

Um das Karosserieaußenhautteil 5 mittels des Randprofiles 7 auf einem Umfangsrand 10 des Karosseriestrukturteiles 6 festzulegen, ist dieser Umfangsrand S-förmig abgewinkelt und bildet so eine umlaufende Aufnahmeschulter für eine Rastnasenprofilanordnung 11 des Randprofiles 7. Der Umfangsrand 10 erstreckt sich umlaufend über den gesamten Umfang des Karosseriestrukturteiles 6, kann jedoch wie auch die Profilkante 9 in gleicher Weise abschnittsweise unterbrochen sein. Auch das Randprofil 7 erstreckt sich einschließlich seines Dichtlippenabschnittes 12 sowie der Rastnasenprofilanordnung 11 umlaufend über die gesamte Umfangslänge der Profilkanten 9 und des Umfangsrandes 10. Zwischen der Rastnasenprofilanordnung 11 und dem die Profilkante 9 einbettenden Profilabschnitt des Randprofiles 7 ist eine umlaufende Stecknut 14 vorgesehen, durch die die Rastnasenprofilanordnung elastisch biegsam gestaltet ist. Die Rastnasenprofilanordnung 11 weist eine nicht näher bezeichnete Anlaufschräge auf, mittels der das Randprofil 7 einschließlich des Karosserieaußenhautteiles 5 in Fahrzeugquerrichtung, d.h. von außen her, auf den Umfangsrand 10 des Karosseriestrukturteiles 6 aufdrückbar ist. Dabei wird die Rastnasenprofilanordnung zu dem die Profilkante 9 umgebenden Profilabschnitt nach außen gedrückt, wodurch die Anlaufschräge an der Stirnkante des Umfangsrandes 10 entlang gleitet. In der Funktionsposition rastet die Rastnasenprofilanordnung 11 auf den Umfangsrand 10 auf, indem es diesen hintergreift. Vorzugsweise ist die Rastnasenprofilanordnung 11 in Umfangsrichtung in mehrere Abschnitte unterteilt, so daß sich lediglich geradlinige Abschnitte der Rastnasenprofilanordnung ergeben, die in einfacher Weise die elastischen Biegungen nach außen verwirklichen können.

Um in der aufgerasteten Funktionsposition der Rastnasenprofilanordnung 11 zu verhindern, daß das Karosserieaußenhautteil 5 wieder nach außen abgezogen werden kann, ist in die Stecknut 14 ein als Sicherungsanordnung dienendes Steckprofil 8 mit einem entsprechenden Steckabschnitt 13 eingedrückt, das rahmenförmig gestaltet sein kann. Das Steckprofil 8 kann Teil einer Innenverkleidung der Fahrzeugseitentür 2 sein. Das Steckprofil 8 ist vorzugsweise aus Aluminium hergestellt. Um einen sicheren Rückhalt des Steckabschnittes 13 in der Stecknut 14 zu erzielen, sind die Seitenwände der Stecknut 14 mit sägezahnartigen Profilierungen 15 versehen. Im eingesteckten Zustand des Steckprofiles 8 verhindert dieses eine elastische Nachgiebigkeit der Rastnasenprofilanordnung 11, so daß das Karosserieaußenhautteil 5 nicht vom Karosseriestrukturteil 6 gelöst werden kann. Zum Lösen des Karosserieaußenhautteiles 5 von dem Karosseriestrukturteil 6 wird in einfacher Weise das Steckprofil 8 entfernt, wodurch das Karosserieaußenhautteil 5 anschließend nach außen abgezogen werden kann.

Beim dargestellten Ausführungsbeispiel wird das Randprofil 7 nach der fertigen Lackierung des Karosserieaußenhautteiles 5 auf die Profilkante 9 aufgezogen, wobei das Randprofil 7 eine ausreichend elastische Nachgiebigkeit für ein derartiges Aufziehen aufweist. Vorzugsweise wird das Karosserieaußenhautteil 5 zusammen mit der Lackierung des Karosseriestrukturteiles 6 als getrenntes Bauteil lackiert. Das Aufbringen des Karosserieaußenhautteiles 5 mittels des Randprofiles 7 erfolgt nach der Fertigstellung der Montage aller Funktionsaggregate am Karosseriestrukturteil 6.

## Patentansprüche

1. Karosserieabschnitt für eine Kraftfahrzeugkarosserie mit einem inneren Karosseriestrukturteil, auf das außen ein Karosserieaußenhautteil über ein aus einem elastisch nachgiebigen Material hergestelltes Randprofil aufgesetzt ist, wobei das Karosserieaußenhautteil mit einer nach innen abgewinkelten, sich längs des Umfangs des Karosserieaußenhautteiles erstreckenden Profilkante versehen ist,
**dadurch gekennzeichnet,**
daß die Profilkante (9) des Karosserieaußenhautteiles (5) formschlüssig in dem elastischen Randprofil (7) eingebettet ist, daß das elastische Randprofil (7) eine elastisch biegsame Rastnasenprofilanordnung (11) aufweist, die auf einen benachbarten Umfangsrand (10) des Karosseriestrukturteiles (6) formschlüssig aufgerastet ist, und daß der Rastnasenprofilanordnung (11) eine lösbare Sicherungsanordnung (8) zur Blockierung der elastisch biegsamen Rastnasenprofilanordnung (11) in ihrer den Umfangsrand (10) des Karosseriestrukturteiles (6) übergreifenden Funktionsposition zugeordnet ist.

2. Karosserieabschnitt nach Anspruch 1,
**dadurch gekennzeichnet,**
daß das Randprofil (7) einen die Profilkante (9) zu einem benachbarten Karosserieabschnitt (4) hin flankierenden Dichtlippenabschnitt (12) aufweist, der derart bündig mit einer Außenkontur des Karosserieaußenhautteiles (5) abschließt, daß der Dichtlippenabschnitt (12) eine Abstandsfuge (3) zwischen den benachbarten Karosserieabschnitten (2, 4) ausfüllt.

3. Karosserieabschnitt nach Anspruch 1 oder 2,
**dadurch gekennzeichnet,**
daß das Randprofil (7) zur Aufnahme der Sicherungsanordnung (8) eine an die Rastnasenprofilanordnung (11) anschließende Stecknut (14) aufweist, und daß die Sicherungsanordnung (8) als korrespondierendes Steckprofil (8) gestaltet ist, das kraftschlüssig in der Stecknut (14) aufnehmbar ist.

4. Karosserieabschnitt nach Anspruch 3,
**dadurch gekennzeichnet,**
daß die Stecknut (14) auf gegenüberliegenden Seiten mit sägezahnartigen Profilierungen (15) versehen ist.

5. Karosserieabschnitt nach Anspruch 1,
**dadurch gekennzeichnet,**
daß die Rastnasenprofilanordnung (11) eine Anlaufschräge aufweist, durch die die Rastnasenprofilanordnung (11) beim Aufsetzen des Randprofiles (7) auf den Umfangsrand (10) des Karosseriestrukturteiles (6) zwangsläufig unter elastischer Biegung zur Seite gedrückt wird.

6. Karosserieabschnitt nach einem der vorhergehenden Ansprüche,
**dadurch gekennzeichnet,**
daß das Randprofil (7) lösbar auf dem Umfangsrand (10) des Karosseriestrukturteiles (6) gehalten ist.

7. Karosserieabschnitt nach einem der vorhergehenden Ansprüche,
**dadurch gekennzeichnet,**
daß das elastische Material des Randprofiles (7) isolierende Eigenschaften aufweist.

8. Karosserieabschnitt nach einem der vorhergehenden Ansprüche,
**dadurch gekennzeichnet,**
daß der Dichtlippenabschnitt (12) und die Rastnasenprofilanordnung (11) als einstückig angeformte Teile des Randprofiles (7) gestaltet sind.
